Europäisches Patentamt

(19) European Patent Office

Office européen des brevets

(11) Numéro de publication: **0 102 307**
B1

(12) **FASCICULE DE BREVET EUROPEEN**

(45) Date de publication du fascicule du brevet:
21.05.86

(51) Int. Cl.⁴: **A 23 L 2/38, A 23 L 1/337**

(21) Numéro de dépôt: 83440044.2

(22) Date de dépôt: 03.08.83

(54) Procédé d'obtention d'une boisson aux algues, et boisson aux algues ainsi obtenue.

(30) Priorité: 05.08.82 FR 8213831

(43) Date de publication de la demande:
07.03.84 Bulletin 84/10

(45) Mention de la délivrance du brevet:
21.05.86 Bulletin 86/21

(84) Etats contractants désignés:
AT DE GB NL SE

(56) Documents cités:
FR - A - 2 479 660

Patent Abstracts of Japan Vol. 5, no. 200, 18 décembre
1981

(73) Titulaire: KLEIN-WANNER Société Anonyme, Rue de la
Brasserie, F-67340 Ingwiller (FR)

(72) Inventeur: Schirmann, Francis, 19, rue Geiler,
F-67000 Strasbourg (FR)

(74) Mandataire: Nuss, Pierre, 10, rue Jacques Kablé,
F-67000 Strasbourg (FR)

LIBER, STOCKHOLM 1986

## Description

La présente invention concerne le domaine de l'industrie alimentaire, en particulier des boissons, et a pour objet un procédé d'obtention d'une boisson aux algues.

L'invention a également pour objet une boisson aux algues obtenue par application de ce procédé.

Actuellement, les boissons disponibles sur le marché, en particulier les boissons dites rafraîchissantes, sont genéralement constituées à base de sucre, d'eau et d'extraits de fruits ou de plantes.

Ces boissons permettent un étanchement de la soif et un rafraîchissement corrects, mais presentent cependant l'inconvénient de renfermer des élements caloriques en proportions plus ou moins importantes, de sorte que leur absorption n'est pas toujours compatible avec la pratique d'un régime, notamment d'un regime hypocalorique.

La présente invention a pour but de pallier cet inconvénient.

Elle a, en effet, pour objet un procédé d'obtention d'une boisson aux algues, caractérisé en ce qu'il consiste essentiellement à découper et à hacher finement une algue marine denommée fucus vésiculosus ou chêne marin, ou encore varech vesiculeux, à la passer à l'étuve pendant environ 24 heures à une température de l'ordre de 120° C, à mesurer le degre d'humidité à la sortie de l'étuve, et à ajouter de l'alcool dont le degré alcoométrique est compris entre 40° et 65° suivant l'importance des pertes par évaporation, à raison d'environ 10 % en poids des algues étuvées, à faire macérer alors le mélange obtenu pendant environ trois semaines dans un récipient fermé, à température ambiante, puis à filtrer ledit mélange, et à presser les parties solides restantes, afin d'en retirer tout le jus concentré, à réaliser ensuite un mélange de jus concentré avec un concentré de fruit ainsi qu'éventuellement avec un ou plusieurs concentrés d'arôme de fruits, de légumes, ou d'herbes, et avec de l'eau et enfin, à pasteuriser le produit obtenu à environ 75°C pendant environ 20 minutes.

L'algue fucus vésiculosus utilisée présente avantageusement une forte teneur en iode et est, de preférence, récoltée en février et en septembre.

Le degré alcoométrique de l'alcool mélangé aux algues à la sortie de l'étuve est fonction de la teneur en humidité desdites algues, et est avantageusement compris entre 40° et 65°.

A titre d'exemple :
- pour une perte de poids des algues à l'étuve de 30 % l'alcool utilisé titre 60° à 65°,
- pour une perte de poids de 40 %, l'alcool titre 50°, et
- pour une perte de poids de 50 %, l'alcool titre 40° à 45°.

Le jus concentré obtenu après macération, filtration et pressage est mélangé à une proportion comprise entre 1 ‰ et 30 ‰, de préférence entre 1 ‰ et 5 ‰, avec de l'eau additionnée éventuellement d'un ou de plusieurs arômes de fruit, ou autres plantes, dans une proportion comprise entre 6 ‰ et 8 ‰ pour chaque arôme, et, le cas echéant d'une proportion sensiblement correspondante d'acide citrique pour réaliser une stabilisation du pH.

Comme arôme de base, il est prévu plus particulierement un concentré de citron ou d'orange, mais d'autres concentrés de fruits peuvent être utilises sans limitation. Toutefois l'utilisation d'autres concentrés nécessite l'addition d'acide citrique, afin de stabiliser le pH du mélange réalise.

En outre, d'autres concentrés de plantes peuvent être ajoutés au mélange tels que des concentrés d'aubépine, de bourrache, d'épine vinette, de cresson, etc..., dans une proportion sensiblement identique à celle du concentré de fruit.

L'invention a également pour objet une boisson aux algues obtenue par application du procédé decrit ci-dessus, caractérisée en ce qu'elle est constituée par un mélange dans l'eau de jus concentré de fucus vesiculosus et d'un concentré d'un fruit, tel que citron ou orange, ou autre, et éventuellement d'un autre concentré de plantes telles que l'aubépine, la bourrache, l'épine vinette, le cresson, etc..., l'addition d'un concentre de fruit autre que le citron s'accompagnant d'une addition correspondante d'acide citrique.

A titre d'exemple, la boisson aux algues conforme à l'invention présente la composition préférentielle suivante :
- 1 ‰ à 5 ‰ de jus concentré de fucus vésiculosus
- 6 ‰ à 8 ‰ de jus concentré de citron
- eau q.s.p. 1000.

Selon une variante de réalisation de l'invention, la boisson présente la composition préférentielle suivante :
- 1 ‰ à 5 ‰ de jus concentré de fucus vésiculosus
- 6 ‰ à 8 ‰ de jus concentré d'orange
- 6 ‰ à 8 ‰ d'acide citrique
- 6 ‰ à 8 ‰ d'aubepine, de bourrache, d'épine vinette, ou de cresson
- eau q.s.p. 1000.

Grâce à l'invention, il est possible de réaliser une boisson aux algues aromatisée, très désaltérante et laissant un arriere-goût d'huître. En outre, une telle boisson est obtenue sans adjonction de sucre, de sorte que son apport calorique est nul.

Bien entendu, l'invention n'est pas limitée au mode de réalisation décrit. Des modifications restent possibles, notamment du point de vue des proportions et de la nature des divers constituants, sans sortir pour autant du domaine de protection de l'invention.

## Revendications

1. Procédé d'obtention d'une boisson aux algues, caractérisé en ce qu'il consiste essentiellement à découper et à hacher finement une algue marine dénommée fucus vesiculosus ou chêne marin, ou encore varech vésiculeux, à la passer à l'étuve pendant environ 24 heures à une température de l'ordre de 120° C, à mesurer le degré d'humidité à la sortie de l'étuve, et à ajouter de l'alcool dont le degré alcoometrique est compris entre 40° et 65° suivant l'importance des pertes par évaporation, à raison d'environ 10 % en poids des algues étuvées, à faire macérer alors le mélange obtenu pendant environ trois semaines dans un recipient fermé, à température ambiante, puis à filtrer ledit mélange et à presser les parties solides restantes, afin d'en retirer tout le jus concentré, à realiser ensuite un mélange de jus concentré avec un concentré de fruit ainsi qu'éventuellement avec un ou plusieurs concentrés d'arôme de fruits, de légumes, ou d'herbes, et avec de l'eau, et enfin, à pasteuriser le produit obtenu à environ 75° C pendant environ 20 minutes.

2. Frocédé, suivant la revendication 1, caractérisé en ce que l'algue fucus vésiculosus utilisée présente avantageusement une forte teneur en iode et est, de preference, récoltée en février et en septembre.

3. Procédé, suivant la revendication 1, caractérisé en ce que le degré alcoométrique de l'alcool mélangé aux algues à la sortie de l'étuve est fonction de la teneur en humidité desdites algues, et est avantageusement compris entre 40° et 65°.

4. Procédé, suivant la revendication 3, caractérisé en ce que
- pour une perte de poids des algues à l'étuve de 30 %, l'alcool utilisé titre 60° à 65°,
- pour une perte de poids de 40 %, l'alcool titre 50°, et
- pour une perte de poids de 50 %, l'alcool titre 40° à 45°.

5. Procédé, suivant la revendication 1, caractérisé en ce que le jus concentré obtenu après macération, filtration et pressage est mélangé à une proportion comprise entre 1 ‰ et 30 ‰, de préférence 1 ‰ et 5 ‰, avec de l'eau additionnée éventuellement d'un ou de plusieurs arômes de fruit, ou autres plantes, dans une proportion comprise entre 6 ‰ et 8 ‰ pour chaque arôme, et, le cas échéant, d'une proportion sensiblement correspondante d'acide citrique pour réaliser une stabilisation du pH.

6. Procédé, suivant la revendication 5, caractérisé en ce que d'autres concentrés de plantes peuvent être ajoutés au mélange tels que des concentrés d'aubépine, de bourrache, d'épine vinette, de cresson, dans une proportion sensiblement identique à celle du concentré de fruit.

7. Boisson aux algues obtenue par application du procédé suivant l'une quelconque des revendications 1 à 6, caractérisée en ce qu'elle est constituée par un mélange dans l'eau de jus concentré de fucus vésiculosus et d'un concentré d'un fruit, tel que citron ou orange, ou autre, et éventuellement d'un autre concentré de plantes telles que l'aubépine, la bourrache, l'épine vinette, le cresson, l'addition d'un concetré de fruit autre que le citron s'accompagnant d'une addition correspondante d'acide citrique.

8. Boisson la revendication 7, caractérisé en ce qu'elle présente la composition préférentielle suivante:
- 1‰ à 5‰ de jus conxentré de fucus vésiculosus
- 6‰ à 8‰ de jus concentré de citron
- eau q.s.p. 1000.

9. Boisson, suivant la revendication 7, caractérisé en ce qu'elle présente la composition préférentielle suivante:
- 1‰ à 5‰ de jus concentré de fucus vésiculosus
- 6‰ à 8‰ de jus concentré d'orange
- 6‰ à 8‰ d'acide citrique
- 6‰ à 8‰ d'aubépine, de bourrache, d'épine vinette, ou de cresson
- aeau q.s.p. 1000.

## Patentansprüche

1. Verfahren zur Gewinnung eines Algengetränkes dadurch gekennzeichnet, daß es im wesentlichen darin besteht, einen fucus vesiculosus (Blasenalge) oder Braunalge oder auch Blasentang genannten Seetang zu zerschneiden und fein zu hacken, ihn ungefähr 24 Stunden lang bei einer Temperatur von etwa 120° in den Trockenschrank zu geben, den Feuchtigkeitsgrad nach Verlassen des Trockenschranks zu messen, und Alkohol, dessen Gehalt je nach Höhe der Verdampfungsverluste zwischen 40° und 65° liegt, im Mengenverhältnis von etwa 10 Gewichts-% der wärmegetrockneten Algen, hinzuzufügen, das erhaltene Gemisch dann ungefähr drei Wochen lang in einem geschlossenen Behälter, bei Umgebungstemperatur, mazerieren zu lassen, danach das besagte Gemisch zu filtern und die rückständigen, festen Bestandteile auszupressen, um den gesamten konzentrierten Saft zu entziehen, daraufhin eine Mischung aus konzentriertem Saft mit einem Fruchtkonzentrat sowie eventuell mit einem oder mehreren Aromakonzentraten aus Früchten, Gemüse oder Kräutern, und mit Wasser, herzustellen, und schließlich das erhaltene Produkt bei etwa 75° ungefähr 20 min. lang zu pasteurisieren.

2. Verfahren nach Anspruch 1, dadurch gekennzeichnet, daß die verwendete Alge fucus vesiculosus vorteilhaft einen starken Jodanteil aufweist und vorzugsweise im Februar und im September geerntet wird.

3. Verfahren nach Anspruch 1, dadurch gekennzeichnet, daß der Alkoholgehalt des zu den Algen beim Verlassen des Trockenschranks gemischten Alkohols von dem Feuchtigkeitgehalt der besagten Algen abhängig ist, und vorteilhaft zwischen 40° und 65° liegt.

4. Verfahren nach Anspruch 3, dadurch gekennzeichnet, daß

- bei einem Gewichtsverlust der Algen im Trockenschrank von 30 %, der verwendete Alkohol 60° bis 65° titriert,
- bei einem Gewichtsverlust von 40%, der Alkohol 50° titriert, und
- bei einem Gewichtsverlust von 50 %, der Alkohol 40° bis 45° titriert.

5. Verfahren nach Anspruch 1, dadurch gekennzeichnet, daß der nach Mazerierung, Filtrierung und Auspressung erhaltene, konzentrierte Saft in einem Verhältnis zwischen 1‰ und 30‰, vorzugsweise zwischen 1‰ und 5‰ mit Wasser vermischt wird, welchem eventuell eines oder mehrere Fruchtaromen oder andere Pflanzen in einem Verhältnis zwischen 6‰ und 8 ‰ für jedes Aroma, und ggf. ein ziemlich entsprechender Anteil an Zitronensäure zugesetzt wird, um eine Stabilisierung des pH-Werts herbeizuführen.

6. Verfahren nach Anspruch 5, dadurch gekennzeichnet, daß der Mischung andere Pflanzenkonzentrate, wie z.B. Konzentrate von Weißdorn, Borretsch, Berberitze und Kresse, in einem dem Fruchtkonzentrat ziemlich identischen Verhältnis hinzugesetzt werden können.

7. Algengetränk, erzielt durch Anwendung des Verfahrens nach einem der Ansprüche 1 bis 6, dadurch gekennzeichnet, daß es aus einer Mischung im Wasser von konzentriertem Saft aus fucus vesiculosus und einem Konzentrat einer Frucht, wie Zitrone oder Orange, oder anderem, und eventuell aus einem anderen Pflanzenkonzentrat wie dem Weißdorn, der Berberitze und der Kresse besteht, wobei die Beifügung eines anderen Fruchtkonzentrats als Zitrone mit dem entsprechenden Hinzufügen einer Zitronensäure verbunden ist.

8. Getränk nach Anspruch 7, dadurch gekennzeichnet, daß es die folgende bevorzugte Zusammensetzung hat:
- 1‰ bis 5‰ konzentrierter Saft aus fucus vesiculosus
- 6‰ bis 8‰ konzentrierter Zitronensaft
- Wasser ad 1000.

9. Getränk nach Anspruch 7, dadurch gekennzeichnet, daß es die folgende, bevorzugte Zusammensetzung hat:
- 1‰ bis 5‰ konzentrierter Saft aus fucus vesiculosus
- 6‰ bis 8‰ konzentrierter Orangensaft
- 6‰ bis 8‰ konzentrierte Zitronensäure
- 6‰ bis 8‰ Weißdorn, Borretsch, Berberitze oder Kresse
- Wasser ad 1000.

## Claims

1. Process for obtaining a beverage based on algae, characterized in that it essentially comprises cutting and finely shredding a marine algae called fucus vesiculosus or fucoid seaweed or bladder wrack, placing. it in the oven for approximately 24 hours at a temperature of approximately 120°C, measuring the degree of humidity on leaving the oven and adding alcohol, whose alcoholometric degree is between 40° and 65° as a function of the losses by evaporation, at a rate of approximately 10% by weight of the algae which have passed through the oven, then macerating the mixture obtained for approximately three weeks in a closed container and at ambient temperature, then filtering said mixture and pressing the remaining solid parts, in order to remove therefrom the concentrated juice, then mixing the concentrated juice with a fruit concentrate, as well as optionally with one or more flavour concentrates of fruits, vegetables or herbs, as well as with water and finally pasteurizing the product obtained for approximately 20 minutes at approximately 75°C.

2. Process according to claim 1, characterized in that the algae fucus vesiculosus used advantageously has a high iodine content and is preferably collected in February and in September.

3. Process according to claim 1, characterized in that the alcoholometric degree of the alcohol mixed with the algae on leaving the oven is a function of the moisture content of said algae and is advantageously between 40° and 65°.

4. Process according to claim 3, characterized in that
- for 30g weight loss of the algae in the oven the alcohol strength is 60° to 65°,
- for a 40% weight loss the alcohol strength is 50°, and
- for a 50% weight loss the alcohol strength is 40° to 45°

5. Process according to claim 1, characterized in that the concentrated juice obtained after maceration, filtration and pressing is mixed in a proportion between 1‰ and 30‰, preferably 1‰ and 5‰ with water to which has optionally been added one or more flavours of fruit or other plants, in a proportion between 6‰ and 8‰ for each flavour and, if appropriate, a substantially corresponding proportion of citric acid in order to stabilize the pH-value.

6. Process according to claim 5, characterized in that other concentrates of plants can be added to the mixture, such as concentrates of hawthorn, borage, barberry, cress, in a substantially identical proportion to that of the fruit concentrate.

7. Beverage based on algae obtained by applying the process according to any one of claims 1 to 6, characterized in that it is constituted by a mixture of water of concentrated fucus vesiculosus juice and a concentrate of a fruit, such as lemon or orange or the like and optionally another concentrate of plants such as hawthorn, borage, barberry or cress, the addition of a fruit concentrate other than lemon being accompanied by a corresponding addition of citric acid.

8. Beverage according to claim 7, characterized in that it has the following preferred
concentration:
- 1‰ to 5‰ concentrated fucus veslculosus juice
- 6‰ to 8‰ concentrated lemon juice
- water ad 1000.

9. Beverage according to claim 7,
characterized in that it has the following preferred
composition:
- 1‰ to $5^0/oo$ of concentrated fucus vesiculosus
juice
- 6‰ to 8‰ of concentrated orange juice
- 6‰ to 8°/00 of citric acid
- 6‰ to 8‰ of hawthorn, borage, barberry or cress
- water ad 1000.